# EUROPÄISCHE PATENTSCHRIFT

(11) **EP 3 505 470 B1**
(45) Veröffentlichungstag und Bekanntmachung des Hinweises auf die Patenterteilung: **10.05.2023**
(21) Anmeldenummer: 18210115.4
(22) Anmeldetag: 04.12.2018
(51) Int. Cl.: B65G 47/92, B25J 15/00, B65G 47/90, B65G 59/02, B65G 1/137

(54) **HANDHABUNGSVORRICHTUNG, MOBILES AUTONOMES FLURFÖRDERZEUG, STATIONÄRE KOMMISSIONIERANLAGE UND EIN VERFAHREN ZUM BETREIBEN DER HANDHABUNGSVORRICHTUNG**
HANDLING DEVICE, MOBILE AUTONOMOUS INDUSTRIAL TRUCK, STATIONARY PICKING FACILITY AND A METHOD FOR OPERATING THE HANDLING DEVICE
DISPOSITIF DE MANIPULATION, CHARIOT DE MANUTENTION MOBILE AUTONOME, INSTALLATION DE PRÉPARATION DE COMMANDES FIXE ET PROCÉDÉ DE FONCTIONNEMENT DU DISPOSITIF DE MANIPULATION

(30) Priorität: 11.12.2017 DE 102017129462
(43) Veröffentlichungstag der Anmeldung: 03.07.2019
(73) Patentinhaber: Linde Material Handling GmbH, 63743 Aschaffenburg (DE)
(72) Erfinder: GROH, Jonas, 63743 Aschaffenburg (DE)
(74) Vertreter: Patentship Patentanwaltgesellschaft

(56) Entgegenhaltungen:
- WO-A1-2015/142911
- WO-A1-2016/014917
- WO-A1-2016/174565
- DE-A1-102006 022 278
- DE-A1-102007 054 867
- FR-A5- 2 107 176
- US-A1- 2014 244 026

## Beschreibung

Die Erfindung betrifft eine Handhabungsvorrichtung, ein mobiles autonomes Flurförderzeug und ein Verfahren zum Betreiben der Handhabungsvorrichtung.

Die Handhabungsvorrichtung ist zum Handhaben und Kommissionieren von Packstücken mit einer Kontaktierungsvorrichtung und einer Tragvorrichtung vorgesehen, wobei die Kontaktierungsvorrichtung zum Kontaktieren von den zu kommissionierenden Packstücken ausgebildet ist und mit der Tragvorrichtung das Packstück an der Handhabungsvorrichtung sicherbar ist, wobei die Kontaktierungsvorrichtung eine adhäsiv wirkende Fläche zur temporären, steuerbaren Kontaktierung zwischen der Handhabungsvorrichtung und dem Packstück zur Ausübung einer Translation mit Scherkraft auf das Packstück umfasst.

Eine vollautomatisierte Kommissionierung von Stückgütern, d.h. von Handelsgütern, die von einer Quellposition, beispielsweise von einer Quellpalette, aufgenommen und auf einem auf dem Flurförderzeug, das heißt einem autonomen Fahrzeug, angeordneten Lasttragmittel, beispielsweise einer Zielpalette, abgesetzt werden, ist bekannt. Dieser Vorgang wird als "Picking" oder "Kommissionieren" bezeichnet.

Bei der vollautomatisierten Kommissionierung sind mobile autonome Flurförderzeuge mit Armmanipulatoren, wie z.B. Knickarmroboter, mit Erkennungseinrichtungen, wie zum Beispiel einer Bilderkennung sowie Fahrzeugnavigationseinrichtungen zum autonomen Durchfahren von Lagern oder Regalgassen eines Regals bekannt.

Es ist bekannt, Packstücke in Form von rechteckigen Kisten mittels einer Handhabungsvorrichtung einzeln oder gleichzeitig mehrere von einer Quellpalette mittels einer mechanischen Greifvorrichtung an zwei gegenüberliegenden Seiten der Packstücke zu greifen, die Packstücke leicht anzuheben und jeweils ein an der Greifvorrichtung montiertes Tablett zum Transport mittels eines Linearantriebs unter die Packstücke zu schieben, die Packstücke über einer Zielpalette knapp über dem Zielplatz zu positionieren und dann anschließend das Tablett wieder einzuziehen sowie das Packstück von der mechanischen Greifvorrichtung zu lösen. Das Packstück fällt einen kurzen, vertikalen Weg nach unten auf die Zielposition und ist somit exakt abgelegt. Diese Greifvorrichtung ist realisierbar, wenn das Packstück von mindestens einer Seite greifbar und mit der Greifvorrichtung anhebbar ist. Diese Greifvorrichtungen eignen sich besonders für Packstücke, die nicht von oben gegriffen werden können, beispielsweise oben offene Trays.

Derartige Greifvorrichtungen, bei denen das Packstück auf ein Tablett aufgeladen wird, werden eingesetzt, da mit diesen Greifvorrichtungen eine hohe Anzahl von verschiedenen Packstücken beim Kommissionieren gehandhabt werden kann. Für die Handhabung von verschiedenen Packstücken ist ein flächiges Untergreifen des Packstücks mit einem Tablett von Vorteil, da hiermit auch sehr instabile und/oder oben offene Packstücke sicher transportiert werden können. Da in der Regel alle möglichen Packstücke auf einem flachen Untergrund sicher stehen können, können die Packstücke im Stehen auch am besten beim vollautomatischen Kommissionieren gehandhabt und transportiert werden.

Das Aufladen der Packstücke auf ein Tablett wird bei vielen Greifvorrichtungen verwendet. Sobald das Packstück auf dem Tablett steht, kann es leicht und sicher transportiert werden. Zum Ablegen des Packstücks auf der Zielpalette wird das Packstück von dem Tablett geschoben oder das Tablett unter dem Packstück herausgezogen.

Die Schwierigkeit bei Greifvorrichtungen, bei denen das Packstück auf ein Tablett aufgeladen wird, besteht darin, das Packstück auf das Tablett zu heben.

In einer Produktionsumgebung kann das Packstück beispielsweise auf einer Rollenbahn geführt werden und ein Tablett kann mit entsprechenden Ausbrüchen das Packstück zwischen den Rollen unterfahren und anheben. Dies eignet sich jedoch nicht beim vollautomatischen Kommissionieren, wobei sich die zu kommissionierenden Packstücke auf einer Palette befinden bzw. übereinander stehen.

Sofern die Packstücke seitlich geklemmt werden können und dann angehoben werden können, um ein Tablett unter das Packstück zu fahren, können entsprechende Greifvorrichtungen bzw. Klemmvorrichtungen verwendet werden, die das Packstück an zwei gegenüberliegenden Seiten greifen bzw. klammern. Hierfür ist jedoch erforderlich, dass die Packstücke von zwei gegenüberlegenden Seiten zugänglich sind. Da beim vollautomatischen Kommissionieren die zu kommissionierenden Packstücke in der Regel auf einer Palette gestapelt sind, eignen sich derartige Greifvorrichtungen nicht zum vollautomatischen Kommissionieren von Packstücken.

Eine alternative Möglichkeit, um ein Packstück unterfahren zu können, ist das Aufwälzprinzip mit einem Aufwälzgreifer. Hier wird eine Aufwälzvorrichtung seitlich an das Packstück gedrückt und dadurch soweit angehoben, dass ein Aufwälzgreifer unter das Packstück fahren kann. Die Aufwälzvorrichtung mit Rollen oder einem umlaufenden Förderband wird an die Stirnseite des Packstücks gedrückt, so dass die Aufwälzvorrichtung das Packstück auf den im Querschnitt gesehen dreieckigen Aufwälzgreifer bewegt. Das Packstück wird dann mit dem Aufwälzgreifer auf die Zielposition bewegt und wieder mit Rollen- oder einem Bandantrieb in die umgekehrte Richtung abgelegt.

Für Lebensmittel und andere Güter gibt es eine Vielzahl verschiedener Umverpackungen (Packstücke) für den Transport zwischen dem Hersteller und dem Endabnehmer. Die Verpackungen unterscheiden sich hinsichtlich der Abmessungen, der Stabilität, der Oberflächenstruktur und den äußeren Gestaltungsmerkmalen, beispielsweise offen/geschlossen, Griffmulden, Rastnasen etc.. Es sind für diese Vielzahl von Umverpackungen verschiedene dazu speziell passende Handhabungsvorrichtungen bekannt, mit welcher die von der entsprechenden Umverpackungen gebildeten Packstücke automatisiert auf einer Zielpalette stapelbar sind. Die speziellen Handhabungsvorrichtungen sind einsetzbar, solange die Umverpackungen homogen sind.

Beim Kommissionieren werden Packstücke aus jeweils einer sortenreinen Palette entnommen und zu kundenspezifischen Paletten zusammengestellt, so dass eine Vielzahl von verschiedenartigen Packstücken gehandhabt und transportiert werden muss. Aus Mangel an einer universellen Handhabungsvorrichtung für verschiedenartige Packstücke erfolgt das Kommissionieren von verschiedenartigen Packstücken in der Regel von Hand durch einen Menschen.

Die DE 10 2006 022 278 A1 offenbart eine gattungsgemäße Handhabungsvorrichtung nach dem Oberbegriff des Anspruchs 1 zum Handhaben und Kommissionieren von Packstücken, die eine von einer ersten Greifeinheit gebildete Kontaktierungsvorrichtung und eine von einer zweiten Greifeinheit gebildete Tragvorrichtung umfasst, die senkrecht zur ersten Greifeinheit angeordnet ist. Zur Aufnahme eines Packstücks wird mit der ersten Greifeinheit die vordere Stirnseite des Packstückes kontaktiert und dann das Packstück horizontal aus einer Paketwand gezogen. Anschließend kann die zweite Greifeinheit unter die Bodenfläche des herausgezogenen Pakets bewegt und an die Bodenfläche angedrückt werden. Die Greifeinheiten können als Sauggreifer, Magnetgreifer, Nadelgreifer, Elektrostatikgreifer oder Adhäsionsgreifer ausgebildet sein.

Die DE 10 2007 054 867 A1 offenbart eine Handhabungsvorrichtung zum Handhaben und Kommissionieren von Packstücken, die aus einem Saugmodul und einem Aufwälzmodul besteht. Zur Aufnahme eines Packstücks wird zuerst mit dem Vakuumgreifer das Packstück angehoben, so dass anschließend in den Spalt unter das Packstück das Aufwälzmodul eingeschoben werden kann.

Die WO 2015/142911 A1 offenbart eine elektro-adhäsives Greifsystem.

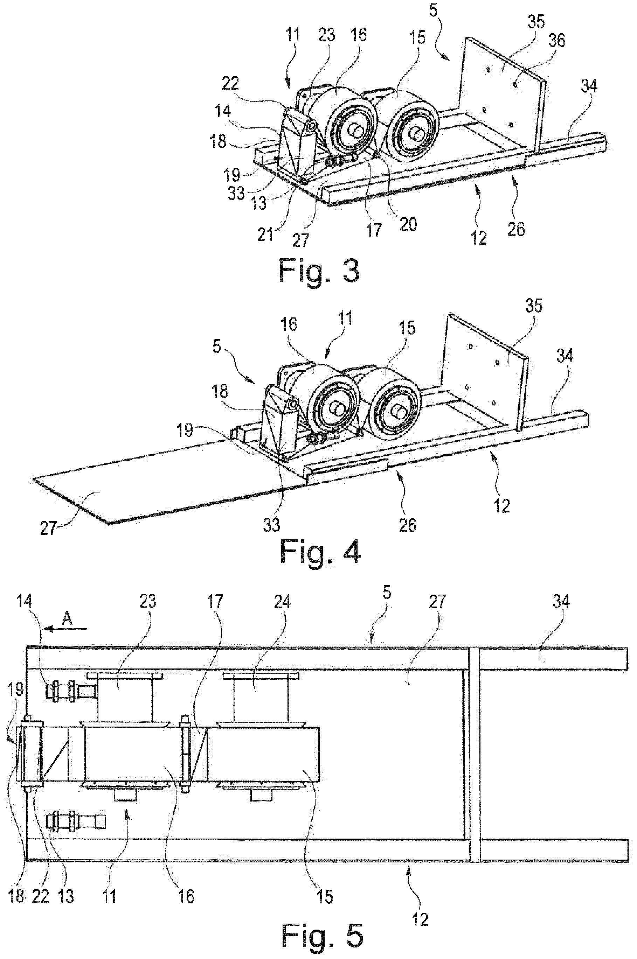

Die FR 2 107 176 A5 offenbart eine Vorrichtung, mit der Produkte umgestapelt werden können. Zur Kontaktierung der Produkte ist gemäß der Figur 3 über Stempel ein Klebeband geführt.

Der vorliegenden Erfindung liegt die Aufgabe zugrunde, verschiedenartige Packstücke automatisiert mittels einer einheitlichen Handhabungsvorrichtung, einem mobilen autonomen Flurförderzeug und mittels eines Verfahrens zum Betreiben der Handhabungsvorrichtung zu kommissionieren.

Die Aufgabe wird durch eine Handhabungsvorrichtung, ein mobiles autonomes Flurförderzeug, eine stationäre Kommissionieranlage und ein Verfahren mit den Merkmalen der unabhängigen Ansprüche 1, 14, 16 und 17 gelöst. Vorteilhafte Weiterbildungen sind in den Unteransprüchen angegeben.

Diese Aufgabe wird dadurch gelöst, dass mit der der adhäsiv wirkenden Fläche nach dem Kontaktierungsvorgang eine Hubbewegung mit dem Packstück entgegengesetzt dessen Gewichtskraft ausführbar ist, wobei die Kontaktierungsvorrichtung ein Trägerband mit einem adhäsiv wirkenden Substrat zur Ausbildung der adhäsiv wirkenden Fläche aufweist, wobei das Trägerband als umlaufendes Endlosband mit einer Regenerationsvorrichtung zur Regeneration der adhäsiven Eigenschaften ausgebildet ist oder wobei das Trägerband auf einer Rolle abrollbar und einer Wickelrolle aufrollbar ausgebildet ist, wobei eine Umlenkrolle, über die das Endlosband geführt ist, oder die Wickelrolle mit einem elektrischen Antriebsmotor antreibbar ist, der von einer Steuerung der Handhabungsvorrichtung ansteuerbar ist, wobei eine Hubbewegung durch Betätigen des Antriebsmotors erfolgt.

Die erfindungsgemäße Handhabungsvorrichtung weist somit mit der adhäsiv wirkenden Fläche eine adhäsive Kontaktierungsvorrichtung auf und bildet somit einen adhäsiven Greifer. Dies bringt mehrere Vorteile mit sich. Durch den Gedanken, die Handhabungsvorrichtung mit dem Packstück mittels einer von der adhäsiv wirkenden Fläche erzeugten Klebewirkung steuerbar und temporär zu verbinden, ist die Form und Beschaffenheit des Packstücks irrelevant. Mit der erfindungsgemäßen Handhabungsvorrichtung können eine Vielzahl von verschiedenartigen Packstücken und somit unterschiedliche Verpackungen gehandhabt werden, die sich hinsichtlich Abmessungen, Stabilität, Oberflächenstruktur und äußeren Gestaltungsmerkmalen, beispielsweise offen/geschlossen, Griffmulden, Rastnasen etc., unterscheiden. Es können auch kleine oder große Packstücke kommissioniert werden, insbesondere Packstücke, die oben offen sind, sogenannte Trays. Es wird hierbei über die adhäsive Fläche ein Hubweg des Packstücks ausgeführt, um das Packstück an der Handhabungsvorrichtung mittels der Tragvorrichtung zu sichern.

Ein erfindungsgemäßer adhäsiver Greifer weist gegenüber mit Vakuum beaufschlagten Vakuum-Greifsystemen die Vorteile auf, dass auch luftdurchlässige Verpackungen aufnehmbar sind und dass deutlich weniger Energie zum Kontaktieren oder Greifen des Packstücks notwendig ist, da dies auf einer adhäsiven Wirkungsweise beruht. Es wird keine energieintensive Erzeugung eines Vakuumdrucks wird nicht benötigt, somit wird die elektrische Energieladung des Flurförderzeugs geschont und die Verfügbarkeit ist höher.

Ein erfindungsgemäßer adhäsiver Greifer weist gegenüber einem Aufwälzgreifer den Vorteil auf, dass keine Rückwand als Gegenlager hinter einem aufzunehmenden Packstück vorhanden sein muss, an der die Anpresskräfte aufgenommen werden, die notwendig sind, um die Normalkräfte für den Reibvorgang aufzunehmen, mit dem ein Packstück auf den Aufwälzgreifer hinaufbewegt wird.

Ein erfindungsgemäßer adhäsiver Greifer weist gegenüber einer Klemmvorrichtung, die ein Packstück zwischen zwei gegenüberliegenden Seiten klemmt und daher das Packstück an zwei gegenüberliegenden Seiten zugänglich sein muss, den Vorteil auf, dass für den erfindungsgemäßen adhäsiven Greifer ein aufzunehmendes Packstück nur an einer Seite für die Kontaktierung mit der adhäsiv wirkenden Fläche zugänglich sein muss.

Bei der mit der adhäsiv wirkenden Fläche auf das Packstück ausgeübten Translation mit Scherkraft handelt es sich bevorzugt um einen Hubweg, der im Wesentlichen vertikal verläuft, um das Packstück auf die Tragvorrichtung zu bewegen. Hierzu wird bevorzugt die adhäsiv wirkende Fläche in vertikaler Richtung bewegt. Packstücke können somit von vorne aus einer einzigen Richtung und von einer Seite aus einem Regal entnommen werden. Dies ist ein weiterer Vorteil im Gegensatz zu Greifsystemen, die zwei zugängliche, insbesondere gegenüberliegende Seiten, erfordern.

Mit dem erfindungsgemäßen adhäsiven Greifer können weiterhin dicht im Verbund stehende Packstücke gehandhabt werden, da diese für das Aufladen auf die Tragvorrichtung seitlich gekippt werden können.

Mit der Handhabungsvorrichtung ist nach dem Kontaktierungsvorgang eine Hubbewegung mit dem Packstück entgegen dessen Gewichtskraft ausführbar, um beispielsweise eine Tablettvorrichtung der Tragvorrichtung unter den Boden des Packstücks zu schieben und somit das Packstück sicher von einer Quell-Lasttragvorrichtung auf eine Ziel-Lasttragvorrichtung zu transportieren.

Eine Tragvorrichtung mit einem translatorisch steuerbaren Tablett hat den Vorteil, dass eine große Anzahl an unterschiedlichen Packstücken, d.h. Objekten, greifbar ist und das Packstück flächig untergreifbar ist. Die Packstücke sind häufig oben offen und/oder weisen Schalen, sogenannte Trays, zum sicheren Transport und Verbesserung der Stabilität auf. Diese sind mit einem Tablett einfach handzuhaben.

Bei der Erfindung weist die Kontaktierungsvorrichtung ein Trägerband mit einem adhäsiv wirkenden Substrat zur Ausbildung der adhäsive wirkenden Fläche auf. Die adhäsiv wirkende Fläche wird somit von einem Klebeband gebildet. Das adhäsiv wirkende Substrat schafft bei Kontaktierung der Handhabungsvorrichtung mit dem Packstück die erforderliche Bindungskraft, um einen Hub des Packstücks, wie oben beschrieben, translatorisch auszuführen, um das Packstück mittels der Tragvorrichtung an der Handhabungsvorrichtung zum Transport zu sichern.

Um Ressourcen zu schonen und einen möglichst geringen Ressourcenverbrauch zu erzeugen, ist gemäß einer Alternative das Trägerband als umlaufendes Endlosband mit einer Regenerationsvorrichtung zur Regeneration der adhäsiven Eigenschaften ausgebildet.

Um eine Regenerationsvorrichtung zu vermeiden, ist gemäß einer weiteren Alternative das Trägerband mit dem adhäsiv wirkenden Substrat von einer Rolle abrollbar und auf einer Wickelrolle aufrollbar ausgebildet. Das von dem Trägerband gebildete Klebeband wird somit von der Rolle abgewickelt und auf die Wickelrolle aufgewickelt. Dies hat den Vorteil, dass immer gleichmäßiges Substrat neu entsprechend gesteuert für die adhäsiv wirkende Fläche zur Verfügung gestellt werden kann.

Um die vertikale Hubbewegung der adhäsiv wirkenden Fläche und somit die Hubbewegung des Packstücks auszuführen, ist bei der Erfindung eine Umlenkrolle, um die das Endlosband geführt wird, oder die Wickelrolle mit einem elektrischen Antriebsmotor antreibbar, der von einer Steuerung der Handhabungsvorrichtung ansteuerbar ist, wobei die Hubbewegung durch Betätigen des Antriebsmotors erfolgt. Die vertikale Bewegung der adhäsiv wirkenden Fläche und somit der Hubvorgang des Packstücks wird somit durch Drehung der Umlenkrolle bzw. der Wickelrolle und somit durch entsprechende Bewegung des Trägerbandes realisiert. Somit wird das Packstück kurz angehoben, nachdem die Kontaktierungsvorrichtung und die Tragvorrichtung zum Packstück bewegt wurde.

Um die Handhabungsvorrichtung an das Packstück beim Kommissioniervorgang richtig heranzufahren, ist gemäß einer vorteilhaften Ausführungsform der Erfindung eine Sensoreinrichtung zur orthogonalen Ausrichtung der Kontaktierungsvorrichtung zu dem aufzunehmenden Packstück vorgesehen. Dies ermöglicht auf einfache Weise, dass die adhäsiv wirkende Fläche vollflächig an das Packstück angedrückt werden kann.

Die Sensorvorrichtung ist bevorzugt von mehreren, insbesondere zwei, Abstandssensoren, insbesondere Ultraschallsensoren oder Laser-Abstandssensoren oder mechanischen Tastern oder Radarsensoren, gebildet, die in Arbeitsrichtung ausgerichtet sind oder von einer Kamera, insbesondere einer Time-of-Flight Kamera, gebildet. Bei Verwendung von Abstandssensoren oder einer Kamera, beispielsweise einer Time-of-Flight Kamera, zur orthogonalen Ausrichtung der Kontaktierungsvorrichtung zu dem aufzunehmenden Packstück ergibt sich als weitere Vorteil, dass auch der Anpressvorgang der adhäsiv wirkende Fläche an das Packstück bei der Kontaktierung der adhäsiv wirkende Fläche mit dem Packstück überwacht werden kann, um einen ausreichend hohen Anpressdruck zu erzeugen, um eine ausreichende und gute adhäsive Verbindung zwischen der adhäsiv wirkende Fläche und dem Packstück zu erzielen.

Alternativ kann die Sensorvorrichtung von einer Kamera und einer Laserprojektionsvorrichtung gebildet sein. Mit der Laserprojektionsvorrichtung wird hierbei eine Markierung an dem aufzunehmenden Packstück erzeugt, die von der Kamera erfasst wird.

Gemäß einer vorteilhaften Ausgestaltungsform der Erfindung lässt sich die mit dem Trägerband versehene Rolle gegen eine neue Rolle austauschen. Durch einen Verbrauch des als Klebebandes ausgebildeten Trägerbandes muss das Trägerband regelmäßig erneuert werden. Sofern das Trägerband verbraucht ist, kann hierzu in einfacher Weise eine leere, abgewickelte Rolle gegen eine neue und volle Rolle ausgetauscht werden. Gemäß einer weiterführenden Ausführungsform kann die leere, abgewickelte Rolle als Wickelrolle zum Aufwickeln wiederverwendet werden.

Beim Einbau einer neuen Rolle kann das Trägerband manuell eingelegt und zu der Wickelrolle geführt werden. Es versteht sich, dass die Kontaktierungsvorrichtung für einen automatischen Einzug des Trägerbandes ausgebildet sein kann, um die Instandhaltungsmaßnahmen durch eine Bedienperson zu vereinfachen.

Gemäß einer vorteilhaften Ausführungsform der Erfindung sind die Rolle und die Wickelrolle in einer Kassette, insbesondere einer Tauschkassette, angeordnet. Durch einen Verbrauch des als Klebebandes ausgebildeten Trägerbandes muss das Trägerband regelmäßig erneuert und somit ausgetauscht werden. Sofern die Rolle und die Wickelrolle in einer Kassette, beispielsweise einer Tauschkassette, angeordnet sind, kann die Kassette und somit das Trägerband in einfacher und schneller Weise ausgetauscht werden. Dadurch kann der Erneuerungsvorgang des Trägerbandes weiter vereinfacht werden, da die Kassette und somit die darin angeordnete Rolle und Wickelrolle gemeinsam nach Verbrauch des Trägerbandes (abgewickelte Rolle) vollständig ausgetauscht werden können. Alle weiteren Bauteile bleiben an der Handhabungsvorrichtung fest.

Bei der Ausführung der adhäsiv wirkenden Fläche als Trägerband kann die gleiche Stelle des Trägerbandes gegebenenfalls mehrfach verwendet werden, in Abhängigkeit von der Verschmutzung des Packstücks und/oder in Abhängigkeit von der Oberflächenbeschaffenheit des Packstücks. Mit jedem Greifvorgang eines Packstücks nimmt hierbei die Adhäsion der adhäsiv wirkenden Fläche ab. Vorteilhafterweise wird je nach Abnutzungsgrad der adhäsiv wirkenden Fläche und/oder nach jedem Greifvorgang eines Packstücks der elektrische Antriebsmotor angesteuert, um das Trägerband mit dem adhäsiv wirkenden Substrat einen definierten Weg weiter vorwärts zu bewegen, nachdem das Packstück auf der Ziel-Lasttragvorrichtung abgelegt ist, und um für das neue Packstück eine frische adhäsiv wirkende Fläche bereitzustellen. Dadurch wird eine zeitlich konstante Klebeeigenschaft der adhäsiv wirkenden Fläche zur Verfügung gestellt. In Abhängigkeit vom zu greifenden Packstück kann hierbei die Bewegung des Trägerbandes durch entsprechende Ansteuerung des Antriebsmotors derart angepasst werden, dass entweder im oberen Bereich oder im mittleren Bereich oder im unteren Bereich die Klebeeigenschaften der adhäsiv wirkenden Fläche am besten sind.

Um das Trägerband straff zu spannen, ist an der Rolle bevorzugt eine mit einer Feder beaufschlagte Führungsrolle im Bandlauf des Trägerbandes vorgesehen oder alternativ ist die Rolle auf einem rotierenden Dorn angeordnet, der mit einer Feder und einer Rutschkupplung in einer Drehrichtung vorgespannt ist, die der Abwickelrotation entgegenwirkt. Ferner können die Rolle und die Wickelrolle mechanisch miteinander, beispielsweise über eine Zahnradvorrichtung, gekoppelt sein, wobei die sich gegensinnig verändernde Rotationsgeschwindigkeiten der Rolle und der Wickelrolle beim Umwickeln berücksichtigt sind.

Die Tragvorrichtung ist gemäß einer vorteilhaften Ausführungsform der Erfindung als translatorisch linear bewegbare Tablettvorrichtung mit einem Linearantrieb am Tablett ausgebildet. Um das Tablett im Aufnahmevorgang des Packstücks richtig anzusteuern, ist bevorzugt der Linearantrieb von der Steuerung der Handhabungsvorrichtung ansteuerbar.

Um die Tragvorrichtung möglichst einfach und sicher im Transport für eine Vielzahl von verschiedenen Packstücken mit verschiedenen variierenden Größen bereitzustellen, ist gemäß einer vorteilhaften Ausführungsform der Erfindung die Tablettvorrichtung als einteilige oder mehrteilige Platte, oder als mindestens zwei parallel zueinander angeordnete Zinken oder als Scherenmechanismus ausgebildet. Die Zinken können bevorzugt auf die Breite bzw. die Beabstandung der Zinken zueinander an die Breite des Packstücks angepasst ansteuerbar sein. Mit einem Scherenmechanismus ist die Tiefe und Breite des Tabletts an die individuelle Bodenfläche des Packstücks anpassbar.

Gemäß einer alternativen Ausführungsform ist die Tragvorrichtung mit einer Aufwälzvorrichtung mit Rollen ausgebildet. Die Rollen sind untereinander wieder antreibbar. Für manche Packstücke und Kommissioniervorgänge ist eine derartige Tragvorrichtung geeignet.

Gemäß einer alternativen Ausführungsform ist auf den Rollen ein geführtes Endlosband ausgebildet. Somit können auch Packstücke mit kleinerer Bodenfläche sicher auf der Tragvorrichtung aufgenommen und transportiert werden.

Um Packstücke mit unterschiedlichen Breiten handzuhaben und kommissionieren zu können, ist die Kontaktierungsvorrichtung und die Tragvorrichtung bevorzugt mehrteilig in der Breite im Wesentlichen senkrecht zur Kommissionier- und Arbeitsrichtung der Handhabungsvorrichtung und insbesondere mittels eines Linearantriebs in dieser Breite variierbar ausgebildet. Bevorzugt bilden die Tragvorrichtung und die Kontaktierungsvorrichtung jeweils eine Einheit und die Handhabungsvorrichtung ist von mindestens zwei derartigen Einheiten gebildet. Die mehreren Einheiten können in der Breite variierbar sein und je nach Packstückbreite auseinander oder zusammengeschoben werden. Somit können stabil Packstücke mit verschiedenen Breiten von der Handhabungsvorrichtung aufgenommen werden und auf einer Ziel-Lasttragvorrichtung abgelegt werden.

Um Packstücke mit verschiedenen Oberflächen von der Handhabungsvorrichtung aufzunehmen, sowie die adhäsive Wirkung und Drücke an der adhäsiven Fläche variierender zu übertragen, steht bevorzugt die adhäsiv wirkende Fläche mit einem elastischen, flexiblen flächigen Gegenlager in Wirkverbindung. Die adhäsiv wirkende Fläche wird somit mit Hilfe des elastischen, flexiblen flächigen Gegenlagers an das Packstück angedrückt. Dadurch kann sich die adhäsiv wirkende Fläche an die Kontur des Packstückes anpassen und es wird eine gute adhäsive Verbindung zwischen der adhäsiv wirkenden Fläche und dem Packstück erzielt.

Das Gegenlager ist bevorzugt von Schaumstoff oder von mittels Federn vorgespannten Stiften gebildet. Somit wird ein adhäsiv wirkendes Trägerband mit adhäsivem Substrat flächig gut an ein Packstück angedrückt.

Um das Packstück mit steigender Adhäsionskraft proportional zum vertikalen Hub zu kontaktieren und somit zu ergreifen, ist die adhäsiv wirkende Fläche, insbesondere in einer Arbeitsebene AE, rechteckförmig ausgebildet und insbesondere mit einem Winkel α, der zwischen ca. 90° bis ca. 110°, weiter bevorzugt zwischen 93° bis ca. 100° ist, bevorzugt auf die individuelle Länge und Oberflächenform des zu kippenden Packstücks einstellbar oder festgestellt, vom Boden der Tragvorrichtung aus zur kommissionierenden Arbeitsebene hin geneigt ausgebildet. Der Winkel α erstreckt sich, in der Seitenansicht der Handhabungsvorrichtung gesehen, vom Boden der Tragvorrichtung aus zur Arbeitsebene AE in der Arbeitsrichtung der adhäsiven Fläche hin. Somit wird ein oberer Bereich des Packstücks zuerst kontaktiert und mit steigendem Hub des Packstücks legt sich das Packstück gekippt an die schräge adhäsive Fläche an, so dass ein Spalt in Form eines Hubs am Boden des Packstücks entsteht, in den die Tragvorrichtung das Tablett von der Tablettvorrichtung einschieben kann.

Gemäß einer weiter bevorzugten Ausführungsform kann die Kontaktierungsvorrichtung und/oder die Tragvorrichtung und/oder der Handhabungsmanipulator mit passiven Schwenkausgleichslagern ausgebildet sein, die eine Ausrichtung zwischen kommissionierender Arbeitsrichtung A und idealer Richtung IR zur Aufnahme des Packstücks ausgleichen. Somit ist die Lagerung von der die Hubbewegung ausführenden Handhabungsvorrichtung flexibel und die adhäsiv wirkende Fläche wird beim Kontakt mit dem Packstück automatisch korrekt ausgerichtet. Die Ausrichtung der Kontaktierungsvorrichtung zu dem aufzunehmenden Packstück erfolgt somit passiv und es sind keine zusätzliche Sensoreinrichtung erforderlich.

Die Aufgabe wird auch durch ein mobiles, autonomes Flurförderzeug mit einem Fahrzeugkörper, einer Fahrzeugsteuerung, einer Navigationsvorrichtung und einer oben beschriebenen Handhabungsvorrichtung gelöst. Bevorzugt ist am Fahrzeugkörper vom Flurförderzeug eine Ziel-Lasttragvorrichtung aufnehmbar, auf die Packstücke aus verschiedenen Quell-Lasttragvorrichtungen von der Handhabungsvorrichtung packbar sind. Somit wird ein mobiles, autonomes Flurförderzeug zur vollautomatisierten Kommissionierung geschaffen, mit dem verschiedenartige Packstücke und somit unterschiedliche Verpackungen kommissioniert werden können.

Um die richtige Ausrichtung der Handhabungsvorrichtung zu dem aufzunehmenden Packstück zu erzielen, ist die von der Kamera und der Laserprojektionseinrichtung gebildete Sensorvorrichtung am Fahrzeugkörper angeordnet. Die Daten der Kamera sind mittels einer Steuerung auswertbar und ein Handhabungsmanipulator mit der daran angeordneten Handhabungsvorrichtung ist somit gegebenenfalls präziser ansteuerbar.

Die Aufgabe wird auch durch eine stationäre Kommissionieranlage mit einer erfindungsgemäßen Handhabungsvorrichtung gelöst. Bevorzugt ist die Handhabungsvorrichtung an einem Handhabungsmanipulator der stationären Kommissionieranlage angebaut, beispielsweise einem Roboterarm. Die Kommissionieranlage weist mehrere Quell-Lasttragvorrichtungen und eine Ziel-Lasttragvorrichtung auf, auf die Packstücke aus den verschiedenen Quell-Lasttragvorrichtungen von der Handhabungsvorrichtung packbar sind. Somit wird eine stationäre Kommissionieranlage zur vollautomatisierten Kommissionierung geschaffen, mit der verschiedenartige Packstücke und somit unterschiedliche Verpackungen kommissioniert werden können.

Die Aufgabe wird auch durch ein Verfahren zum Betreiben einer oben beschriebenen Handhabungsvorrichtung mit einer Kontaktierungsvorrichtung und einer Tragvorrichtung gelöst, wobei mit der Handhabungsvorrichtung Packstücke von einer Quell-Lasttragvorrichtung auf eine Ziel-Lasttragvorrichtung kommissioniert werden, wobei mit der Kontaktierungsvorrichtung das zu kommissionierende Packstück an der Quell-Lasttragvorrichtung kontaktiert wird, nach dem Kontaktierungsvorgang eine Hubbewegung mit dem Packstück relativ zur Tragvorrichtung ausgeführt wird und mit der Tragvorrichtung das Packstück an der Handhabungsvorrichtung zum Kommissionieren gesichert wird. Die Kontaktierungsvorrichtung umfasst eine adhäsiv wirkende Fläche, mit der das Packstück an der Handhabungsvorrichtung temporär und steuerbar adhäsiv kontaktiert wird und mit der auf das Packstück eine Translation mit Scherkraft mit einem relativen Hub gegenüber der Tragvorrichtung ausgeübt wird. Somit ist das Packstück von einer zugänglichen Seite kommissionierbar, wobei das Packstück verschiedene Größen und Oberflächen aufweisen kann. Die nach dem Kontaktierungsvorgang durchgeführte Hubbewegung wird im Wesentlichen entgegengesetzt der Gewichtskraft des Packstücks ausgeführt. Der Hub des zu kommissionierenden Packstücks erfolgt über die Berührung des Packstücks mit der adhäsiven Fläche, die in vertikaler Richtung bewegt werden kann. Dadurch wird ebenfalls das Packstück in vertikaler Richtung bewegt und um einen bestimmten Hub angehoben. Eine automatisierte Kommissionierung von verschiedenen Packstücken, die 24 Stunden und 7 Tage die Woche vollautomatisiert arbeiten kann, ist somit realisierbar.

Nach Durchführen des Hubs des Packstücks wird bei dem erfindungsgemäßen Verfahren die Tragvorrichtung unter das Packstück geschoben.

Anschließend wird bei dem erfindungsgemäßen Verfahren das Packstück auf die Tragvorrichtung abgelegt. Das Packstück kann somit sicher auf der Tragvorrichtung von der Quell-Lasttragvorrichtung zur Ziel-Lasttragvorrichtung transportiert werden.

Zum Ablegen des Packstücks an der Ziel-Lasttragvorrichtung wird bei dem erfindungsgemäßen Verfahren die Tragvorrichtung unter dem Packstück herausgezogen und anschließend die adhäsiv wirkende Fläche von dem Packstück wegbewegt, insbesondere in horizontaler Richtung wegbewegt.

Gemäß eines weiterbildenden Verfahrens, um Packstücke mit einer größeren Breite und gegebenenfalls höheren Gewichten, die insbesondere im Verbund stehen, kommissionieren zu können, d.h. von einer Quell-Lasttragvorrichtung jeweils einzelne Packstücke entnehmen zu können, sind die Kontaktierungsvorrichtung und die Tragvorrichtung in der Breite im Wesentlichen senkrecht zur kommissionierenden Arbeitsrichtung in mehreren Einheiten ausgebildet und die Einheiten werden im Kommissioniervorgang eines Packstücks derart nacheinander betrieben, dass ein zu kommissionierendes Packstück zuerst mit einer ersten Einheit an einer ersten Seite angehoben und auf die Tragvorrichtung der ersten Einheit abgelegt wird, an der ein benachbartes Packstück angeordnet ist, und anschließend das Packstück mit einer zweiten Einheit an einer zweiten Seite angehoben und auf die Tragvorrichtung der zweiten Einheit abgelegt wird, an der kein benachbartes Packstück angeordnet ist. Somit wird das Packstück zuerst mittels einer Hubbewegung leicht auf eine Seite gekippt, an der nicht direkt ein Packstück anschließt, so dass ein Kippvorgang, ohne Reibkräfte am Boden zu erzeugen, möglich ist. Aufgrund dieser sukzessiven Vorgehensweise können Packstücke über zwei, drei oder mehr Einheiten auf die Handhabungsvorrichtung gepackt werden und damit die Packstücke einzeln zur Ziel-Lasttragvorrichtung transportiert werden. Das Packstück muss auch nicht nach hinten gekippt werden, was nachteilig ist, wenn das Packstück möglicherweise bereits direkt an ein weiteres dahinter liegendes Packstück anschließt. Gegebenenfalls ist entsprechend die Kontaktierungsvorrichtung flexibel gelagert, so dass die Kippbewegung der Oberfläche des Packstücks von der Kontaktierungsvorrichtung mitausgeführt und somit ausgeglichen wird. Der Rotationsgrad der Kippbewegung ist vom Packstück abhängig und somit ist dies auch von der flexiblen Vorrichtung mitberücksichtigt.

Weitere Vorteile und Einzelheiten der Erfindung werden anhand der in den schematischen Figuren dargestellten Ausführungsbeispiele näher erläutert. Hierbei zeigen
- Fig. 1: eine schematische Draufsicht eines mobilen autonomen Flurförderzeugs mit einer erfindungsgemäßen Handhabungsvorrichtung,
- Fig. 2: eine schematische Draufsicht mit einem Ausschnitt der Fig. 1 mit einer zur Fig. 1 alternativen Kontaktierungsvorrichtung,
- Fig. 3: eine perspektivische Ansicht einer erfindungsgemäßen Handhabungsvorrichtung mit der Kontaktierungsvorrichtung und der Tragvorrichtung der Fig. 1,
- Fig. 4: die perspektivische Ansicht der Fig. 3 mit einer ausgefahrenen Tablettvorrichtung,
- Fig. 5: eine schematische Draufsicht der Handhabungsvorrichtung gemäß der Fig. 3,
- Fig. 6: eine schematische Seitenansicht der Kontaktierungsvorrichtung, vergrößert gemäß der Fig. 1,
- Fig. 7: eine schematische Seitenansicht eines ersten Verfahrensschrittes der Handhabungsvorrichtung gemäß Fig. 1,
- Fig. 8: eine schematische Seitenansicht gemäß der Fig. 7 in einem zweiten Verfahrensschritt,
- Fig. 9: eine schematische Seitenansicht gemäß der Fig. 7 in einem dritten Verfahrensschritt,
- Fig. 10: eine schematische Draufsicht einer mehrteiligen Handhabungsvorrichtung,
- Fig. 11: eine schematische Vorderansicht von zu kommissionierenden Packstücken,
- Fig. 12: eine schematische Vorderansicht der Fig. 11 gemäß eines ersten Verfahrensschritts, ausgeführt mit der Handhabungsvorrichtung gemäß Fig. 10,
- Fig. 13: eine schematische Vorderansicht eines weiteren Verfahrensschritts, der auf den ersten Verfahrensschritt gemäß der Fig. 12 folgt, und
- Fig. 14: eine schematische Vorderansicht von Packstücken bei einem weiteren Verfahrensschritt, der auf den ersten Verfahrensschritt der Fig.12 und auf den Verfahrensschritt der Fig. 13 folgt.

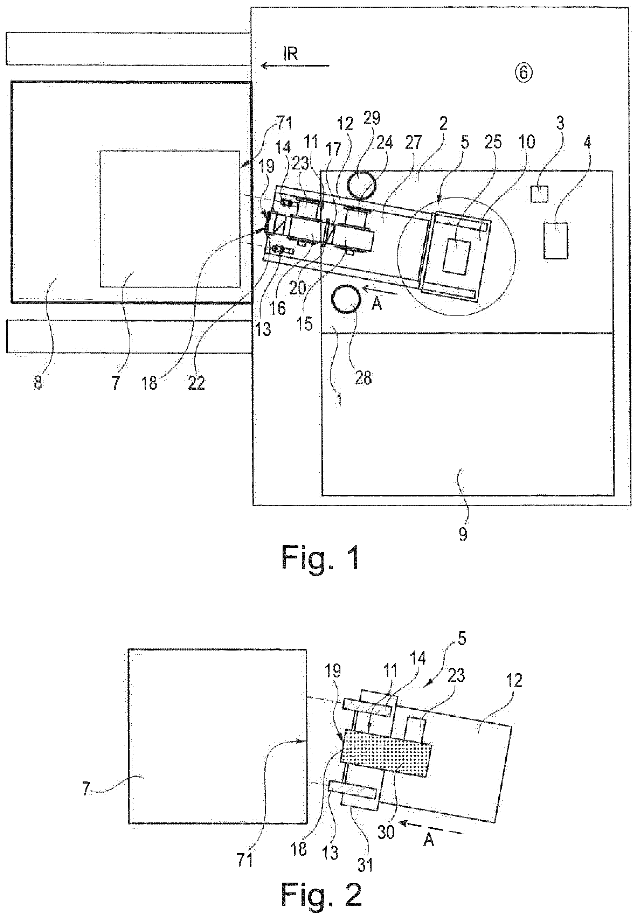

Die Fig. 1 zeigt eine schematische Draufsicht eines autonomen Flurförderzeugs 1 mit einem Fahrzeugkörper 2, einer Fahrzeugsteuerung 3, einer Navigationsvorrichtung 4 und einer erfindungsgemäßen Handhabungsvorrichtung 5.

Das autonome Flurförderzeug 1 fährt in einem Gang 6 durch ein Lager, um Packstücke 7 einzeln von verschiedenen Quellen, insbesondere von einer in der Fig. 1 dargestellten Quell-Lasttragvorrichtung 8, entsprechend eines definierten Kundenauftrags auf eine Ziel-Lasttragvorrichtung 9 auf dem autonomen Flurförderzeug 1 zu packen und damit zu kommissionieren.

Die Handhabungsvorrichtung 5 ist an einem Handhabungsmanipulator 10 angeordnet, der beispielsweise von einem Roboterarm gebildet sein kann.

Die Handhabungsvorrichtung 5 ist zum Handhaben und Kommissionieren von Packstücken 7 mit einer Kontaktierungsvorrichtung 11 und einer Tragvorrichtung 12 ausgebildet.

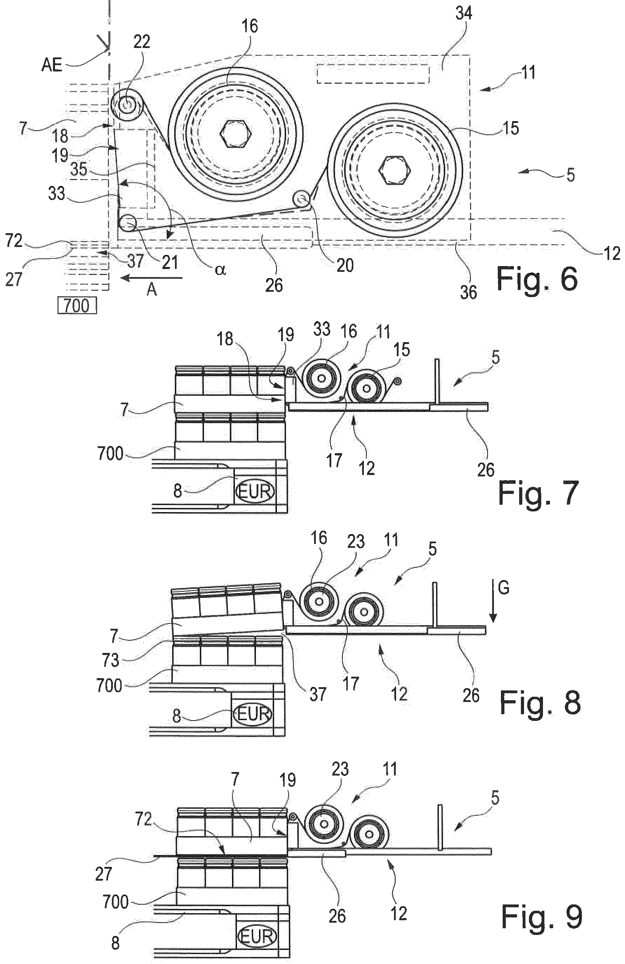

Die Kontaktierungsvorrichtung 11 ist zum Kontaktieren der zu kommissionierenden Packstücken 7 ausgebildet. Mit der Handhabungsvorrichtung 5 ist nach dem Kontaktierungsvorgang, wie unten in Fig. 8 gezeigt, eine Hubbewegung des Packstücks 7 entgegengesetzt zu dessen Gewichtskraft G ausführbar.

Um die Kontaktierungsvorrichtung 11 orthogonal zu dem zu kommissionierenden Packstück 7 ausrichten zu können und den Abstand zum Packstück 7 genau zu bestimmen und damit den Handhabungsmanipulator 10 so anzusteuern, dass die Oberfläche des Packstücks 7 gerade kontaktiert wird und das Packstück 7 nicht beschädigt wird, also der Kontaktierungsvorgang erfolgreich verläuft, sind mindestens zwei Abstandssensoren 13, 14 in einer Arbeitsrichtung A an der Handhabungsvorrichtung 5 beidseitig von der Kontaktierungsvorrichtung 11 angeordnet. Die Abstandssensoren 13, 14 sind bevorzugt Ultraschallsensoren oder Laserabstandssensoren oder mechanische Tastvorrichtungen.

Die Kontaktierungsvorrichtung 11 umfasst eine Rolle 15 und eine Wickelrolle 16. Auf der Rolle 15 ist ein Trägerband 17 mit einem adhäsiv wirkenden Substrat 18 zur Ausbildung einer adhäsiv wirkenden Fläche 19 aufgerollt. Die adhäsiv wirkende Fläche 19 ist an der Fronseite der Handhabungsvorrichtung 5 angeordnet. Das Trägerband 17 ist somit als Klebeband ausgebildet. Die adhäsiv wirkenden Fläche 19 wird somit von einem als Klebeband gebildeten Trägerband 17 gebildet, das von der Rolle 15 abgewickelt und auf die Wickelrolle 16 aufgewickelt wird.

Das Trägerband 17 ist über mehrere Führungsrollen 20, 21, 22, wie in Fig. 3 und 6 gezeigt ist, gespannt und wird von der Rolle 15 abgerollt und auf der Wickelrolle 16 aufgerollt. Die Wickelrolle 16 wird von einem elektrischen Antriebsmotor 23 angetrieben. Die Rolle 15 ist bevorzugt auf einem Dorn 24 aufgesetzt, der in zur Wickelrichtung des Antriebsmotors 23 entgegengesetzter Richtung das Trägerband 17 vorspannt, so dass das Trägerband 17 immer gespannt bleibt. Die Rolle 15 dient somit zum Spannen des Trägerbands 17. Der Dorn 24 kann hierfür eine Rückdrehfeder oder eine Reibkupplung aufweisen. Alternativ wird die Rotation der Rolle 15 und der Wickelrolle 16 über eine mechanische Vorrichtung jeweils in Wirkverbindung miteinander gesteuert.

Mittels der Abstandssensoren 13, 14 wird das Flurförderzeug 1 und der Handhabungsmanipulator 10 über die Fahrzeugsteuerung 3 und/oder über die Steuerung 25 der Handhabungsvorrichtung 5 derart angesteuert, dass die Handhabungsvorrichtung 5 mit der Arbeitsrichtung A zum Packstück 7 orthogonal zur Breite 71 des Packstücks 7 ausgerichtet ist. Somit kann die adhäsiv wirkende Fläche 19 vollflächig die Fläche 71, insbesondere eine Stirnseite, des Packstücks 7 kontaktieren und die maximale Adhäsionskraft entwickeln, um eine Hubbewegung des Packstücks 7 auszuführen, wenn die Wickelrolle 16 mittels des Antriebsmotors 23 bewegt wird.

Sobald der Hub des Packstücks 7 ausgeführt ist, kann die linear bewegbare Tablettvorrichtung 26 mittels eines Linearantriebs ein Tablett 27 der Tragvorrichtung 12 translatorisch horizontal ausschieben, so dass das Packstück 7 an der Handhabungsvorrichtung 5 gesichert wird. Somit kann das Packstück 7 mittels der Handhabungsvorrichtung 5 sicher von der Quell-Lasttragvorrichtung 8 auf die Ziel-Lasttragvorrichtung 9 transportiert und gepackt werden. Das Packstück 7 wird also mittels der adhäsiv wirkenden Fläche 19 temporär und steuerbar adhäsiv kontaktiert. Zum Unterschieben des Tabletts 27 unter das Packstück 7 wird auf das Packstück 7 über die Berührung des Packstücks 7 mit der adhäsiv wirkenden Fläche 19, welche durch die Drehbewegung der Wickelrolle 16 mittels des Antriebsmotors 23 in vertikaler Richtung bewegt wird, eine vertikale Translation mit Scherkraft mit einem relativen Hub gegenüber der Tragvorrichtung 12 ausgeübt.

Am Fahrzeugkörper 2 kann alternativ oder zusätzlich zu den Abstandsensoren 13, 14 eine Kamera 28 und eine Laserprojektionsvorrichtung 29 angeordnet sein, um den Kommissioniervorgang zu unterstützen, d.h. eine orthogonale Ausrichtung der Handhabungsvorrichtung 5 gegenüber dem Packstück 7 zu erzielen.

An der Handhabungsvorrichtung 5 können nicht näher gezeigte Schwenkausgleichslager ausgebildet sein, um die adhäsiv wirkende Fläche 19 zwischen der kommissionierenden Arbeitsrichtung A und einer idealen Richtung IR, die senkrecht zur Fläche 71 des Packstücks 7 ist, die von der adhäsiv wirkenden Fläche 19 kontaktiert werden soll, zur Aufnahme des Packstücks 7 auszugleichen. Diese passiven Schwenkausgleichslager können entweder an der Kontaktierungsvorrichtung 11 selbst oder an der Tragvorrichtung 12 oder an dem Handhabungsmanipulator 10 ausgebildet sein.

Die Fig. 2 zeigt einen Ausschnitt in der Draufsicht entsprechend der Fig. 1 mit dem Unterschied, dass zur Bildung der adhäsiv wirkenden Fläche 19 ein Endlosband 30 vorgesehen ist, das mit einem adhäsiv wirkenden Substrat 18 versehen ist. Für die Regeneration der Klebeeigenschaften des Endlosbandes 30 ist eine Regenerationsvorrichtung 31 vorgesehen. Das Endlosband 30 wird mittels eines elektrischen Antriebsmotors 23 zur Rotation angetrieben.

Die Fig. 3 zeigt eine perspektivische Ansicht der erfindungsgemäßen Handhabungsvorrichtung 5 mit der Kontaktierungsvorrichtung 11 und der Tragvorrichtung 12. Die Abstandssensoren 13 und 14 sind beidseitig der adhäsiv wirkenden Fläche 19 und senkrecht zur adhäsiv wirkenden Fläche 19, d.h. in Arbeitsrichtung A, angeordnet. Von der Rolle 15 wird das Trägerband 17 über die Führungsrollen 20, 21 und 22 gelenkt und mittels des Antriebsmotors 23 auf der Wickelrolle 16 aufgerollt.

Hinter der adhäsiv wirkenden Fläche 19 ist bevorzugt ein elastisches, flexibles, deformierbares, flächiges Gegenlager 33 angeordnet, das beispielsweise aus Schaumstoff oder einem äquivalenten Werkstoff hergestellt ist, oder beispielsweise umfasst es auch mit Federn vorgespannte Stifte. Die adhäsiv wirkende Fläche 19 wird über das Gegenlager 33 an das Packstück 7 gedrückt. Dadurch kann sich die adhäsiv wirkende Fläche 19 an die Kontur des Packstücks 7 anpassen, um eine gute Klebeverbindung zwischen dem Packstück 7 und der adhäsiv wirkenden Fläche 19 zu erzeugen. Das Gegenlager 33 gewähreistet weiterhin, dass das Packstück 7 nicht von den Führungsrollen 21, 22 berührt werden muss. Es ist somit keine kraftgesteuerte Bewegung des Handhabungsmanipulators 10 erforderlich.

Mit den Abstandssensoren 13, 14 erfolgt durch entsprechende Bewegung des Handhabungsmanipulators 10 die orthogonale Ausrichtung der adhäsiv wirkenden Fläche 19 zum Packstück 7. Mit den Abstandssensoren 13, 14 kann weiterhin sichergestellt werden, dass das elastische Gegenlager 33 beim Kontaktierungsvorgang des Packstücks 7 weit genug verformt wird, um einen ausreichenden Anpressdruck der adhäsiv wirkenden Fläche 19 auf das Packstück 7 für eine ausreichend gute adhäsive Verbindung zwischen der adhäsiv wirkenden Fläche 19 und dem Packstück 7 zu erzeugen.

Die Tragvorrichtung 12 weist eine linear translatorisch bewegbare Tablettvorrichtung 26 auf, die auf linearen Schienen 34 bewegbar ist und mittels eines nicht gezeigten Linearantriebs angesteuert wird. Ein Tablett 27 der Tablettvorrichtung 26 ist in der Fig. 3 in die Handhabungsvorrichtung 5 eingefahren, um einen kommissionierenden Vorgang zu beginnen. Das Tablett 27 ist im Ausführungsbeispiel der Fig. 3 als einteilige Platte ausgebildet. Die Handhabungsvorrichtung 5 hat am gegenüberliegenden Ende zur kontaktierenden Fläche 19 einen Befestigungsflansch 35 mit Befestigungslöchern 36, um die Tragvorrichtung 12 zusammen mit der Kontaktierungsvorrichtung 11 an dem in der Fig. 3 nicht gezeigten Handhabungsmanipulator 10 zu montieren.

Die Fig. 4 zeigt die perspektivische Ansicht der Fig. 3, mit dem Unterschied, dass die Tablettvorrichtung 26 mit dem ausgefahrenen Tablett 27 in einer maximal ausgefahrenen Stellung und Position dargestellt ist.

Die Fig. 5 zeigt die Handhabungsvorrichtung 5 der Fig. 3 und 4 schematisch in der Draufsicht. Das Trägerband 17 kann vorgespannt sein durch den vorgespannten Dorn 24 der Rolle 15, der die Rolle 15 in einer aufwickelnden Richtung entgegen der Rotation des Antriebsmotors 23 beaufschlagt.

Die Fig. 6 zeigt schematisch in einer Seitenansicht in gestrichelten Linien die Umhausung der Kontaktierungsvorrichtung 11 an der Handhabungsvorrichtung 5 in einer besonderen Ausführungsform, in der die Rolle 15 und die Wickelrolle 16 mit den Führungsrollen 20, 21, 22 als einheitliche auswechselbare Kassette 34 ausgebildet sind. Für das flächige Gegenlager 33 ist die Kassette 34 mit einer entsprechenden Aussparung 35 versehen.

Nach einem vollständigen Verbrauch des Trägerbands 17 muss dieses erneuert werden. Die Kassette 34 bildet eine leicht auswechselbare Tauscheinheit, die die Rolle 15 und die Wickelrolle 16 sowie die Führungsrollen 20, 21 und 22 umfasst. Die Abstandssensoren 13, 14 und die Tragvorrichtung 12 sowie der Antriebsmotor 23 und der Dorn 24 verbleiben an der Handhabungsvorrichtung 5 festverbaut. Die Kassette 34 kann als Einwegkassette oder insbesondere auch als wiederverwendbare Kassette 34 ausgeführt sein.

Die Fig. 6 zeigt weiterhin, dass das Trägerband 17 mit dem Substrat 18 zur Ausbildung der kontaktierenden adhäsiven Fläche 19 mit den Führungsrollen 21 und 22 mit einem Winkel α aufgespannt ist, der etwas größer als 90° zwischen dem Boden 36 der Tragvorrichtung 12 und der kommissionierenden Arbeitsebene AE der Arbeitsrichtung A, die senkrecht zum Boden 36 ist, hin ausgebildet ist. Somit wird bei einem Kontaktierungsvorgang das Packstück 7, das wie die Tragvorrichtung 12 etwas farblich schwächer im Hintergrund der Fig. 6 dargestellt ist, an der Stirnfläche zuerst im oberen Bereich vom Trägerband 17 kontaktiert. Proportional zum Hub, wobei das Packstück 7 gekippt wird, legt sich das Trägerband 17 entsprechend mit der kontaktierenden Fläche 19 an das Packstück 7 an der Stirnfläche des Packstücks 7 an. Die Tablettvorrichtung 26 ist in der Fig. 6 im ausgefahrenen Zustand dargestellt, und das Packstück 7 liegt auf dem ausgefahrenen Tablett 27. Das Tablett 27 ist gegenüber dem darunter liegenden Packstück 700 bereits leicht um den Hub 37 angehoben.

Die Fig. 7 zeigt schematisch in der Seitenansicht einen ersten Verfahrensschritt zum Betreiben des Verfahrens mit der erfindungsgemäßen Handhabungsvorrichtung 5, wobei der Handhabungsmanipulator 10 aus Gründen der Übersicht weggelassen worden ist. Es sind somit die Kontaktierungsvorrichtung 11 vereinfacht und abstrahiert als auch die Tragvorrichtung 12 vereinfacht und abstrahiert in der Seitenansicht, zusammen mit einer Quell-Lasttragvorrichtung 8 dargestellt, auf dem das zu kommissionierende Packstück 7 auf einem identischen Packstück 700 gelagert ist.

In dem ersten Verfahrensschritt (Anfahren an das Packstück 7) eines Greifvorgangs zur Aufnahme des Packstücks 7 wird die Kontaktierungsvorrichtung 11 mit Hilfe des Handhabungsmanipulators 10, nachdem das mobile Flurförderzeug 1 entsprechend richtig positioniert ist, so an das kommissionierende Packstück 7 herangefahren, dass die adhäsiv wirkende Fläche 19 des Trägerbands 17 an die vordere Stirnseite des Packstücks 7 sicher gedrückt wird. Die Kräfte des adhäsiven Substrats 18 binden die Oberfläche einer Seite des Packstücks 7 an das Trägerband 17.

In Fig. 8 ist in Fortführung der nächstfolgende zweite Verfahrensschritt (Anheben des Packstücks 7) dargestellt. In dem zweiten Verfahrensschritt wird mittels des Antriebsmotors 23 die Wickelrolle 16 mit dem Trägerband 17 aufgewickelt, so dass die adhäsiv wirkende Fläche 19 in vertikaler Richtung nach oben bewegt wird und somit das Packstück 7 vom darunter liegenden Packstück 700 translatorisch eine Hubbewegung mit einem Hub 37 ausführt. Da das Packstück 7 nur an der kontaktierten vorderen Stirnseite angehoben wird, kippt das Packstück 7 bei der Hubbewegung um die hintere Kante 73. Durch das Anheben des Packstücks 7 entsteht unter dem Packstück 7 ein Spalt zu dem darunter befindlichen Packstück 700.

Die Fig. 9 zeigt den folgenden dritten Verfahrensschritt (Unterfahren des Packstücks 7). Hier wird nun mittels des Linearantriebs die Tablettvorrichtung 26 mit dem Tablett 27 von der Tragvorrichtung 12 ausgefahren, so dass das Tablett 27 unter den Boden 72 des Packstücks 7 geschoben wird. Der Ausfahrweg des Tabletts 27 wird von dem Linearantrieb derart angesteuert, dass der Ausfahrweg des Tabletts 27 an die Länge des Packstücks 7 angepasst ist. Die Fig. 9 zeigt in diesem Fall einen besonderen Einzelfall, bei dem das Tablett 27 deutlich über den Boden 72 hinausragt. In der Praxis wird das Tablett 27 nur so weit ausgefahren, wie der Boden 72 des Packstücks 7 tatsächlich erreicht.

Ist das Tablett 27 vollständig unter das Packstück 7 geschoben, so kann die adhäsive Fläche 19 mittels des Antriebsmotors 23 abgesenkt werden, so dass das Packstück 7 auf das Tablett 27 abgelegt wird und auf dem Tablett 27 steht. Hierzu rollt der Antriebsmotor 23 die Wickelrolle 16 entsprechend leicht ab, entgegen der herkömmlichen Wickelrichtung.

Das auf dem Tablett 27 stehende Packstück 7 kann dann zur Zielposition bewegt werden.

Der Ablegevorgang des Packstücks 7 auf einer Zielposition an einer Ziel-Lasttragvorrichtung 9 ist nicht explizit dargestellt und wird deshalb kurz beschrieben.

Sobald der Handhabungsmanipulator 10 über der Ziel-Lasttragvorrichtung 9 einige Millimeter über der Zielposition die Tragvorrichtung 12 mit dem darauf stehenden Packstück 7 transportiert hat, wird das Tablett 27 unter dem Packstück 7 herausgezogen, so dass das Packstück 7 auf der Zielposition zu liegen kommt.

Anschließend wird die adhäsive Fläche 19 in horizontaler Richtung mittels des Handhabungsmanipulators 10 vom Packstück 7 wegbewegt. Da die Haftkraft des Packstücks 7 auf der Zielposition aufgrund der Gewichtskraft des Packstücks 7 größer ist als die nur geringen adhäsiven Normalkräfte, löst sich die adhäsive Fläche 19 sehr leicht vom Packstück 7 ab und das Packstück 7 wird nicht weiterbewegt. Sofern die adhäsiv wirkende Fläche 17 als biegsames Material, beispielsweise als Klebeband ausgebildet ist, kommt es beim Lösen zu einer Schälbewegung.

Je nach Ausführung der adhäsiv wirkenden Fläche 19 und dem adhäsiven Substrat 18, kann üblicherweise die gleiche Stelle des Trägerbandes 17 mehrfach verwendet werden, in Abhängigkeit der Verschmutzung des zu hebenden Packstücks 7 und/oder in Abhängigkeit der Oberflächenbeschaffenheit des Packstücks 7. Mit jedem Greifvorgang eines Packstücks 7 nimmt die Adhäsion des Trägerbandes 17 an der adhäsiv wirkenden Fläche 19 ab. Bevorzugt wird nach jedem Greifvorgang eines Packstücks 7 durch Aufwickeln auf der Wickelrolle 16 das Trägerband 17 ein kleines Stück aufgewickelt, um die adhäsiv wirkende Fläche 19 zu erneuern. Durch die Weiterbewegung des Trägerbandes 17 wird an der adhäsiv wirkenden Fläche 19 somit eine lokal inhomogene, aber zeitlich konstante Klebeeigenschaft gewährleistet.

In Abhängigkeit des zu greifenden und zu kontaktierenden Packstücks 7 kann die Durchlaufrichtung bzw. die Durchlaufmenge des Trägerbandes 17 angepasst werden, so dass entweder im oberen oder im unteren oder im gesamten Bereich der adhäsiven Fläche 19 die Adhäsionseigenschaften durch ein unbenutztes, frisches Substrat 18 als Klebeband zum Einsatz kommen.

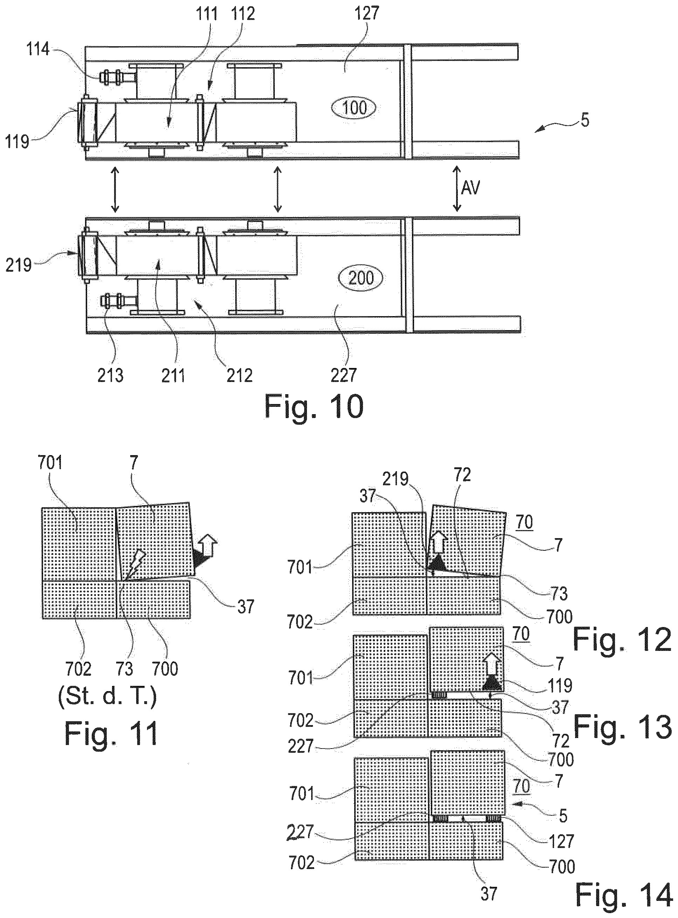

Die Fig. 10 zeigt in einer Draufsicht die Handhabungsvorrichtung 5 mit mehreren, im dargestellten Ausführungsbeispiel zwei, Einheiten 100, 200, die jeweils einen Aufbau gemäß der Figur 5 aufweisen und jeweils eine Kontaktierungsvorrichtung 111, 211 und eine Tragvorrichtung 112, 212 mit einem Tablett 127, 227 aufweisen. Die Handhabungsvorrichtung 5 ist somit zweiteilig, d.h. mehrteilig, ausgebildet mit zwei adhäsiv wirkenden Greifern. Somit ist es auch möglich, breitere Packstücke 7 zu kommissionieren. Bevorzugt ist mittels eines nicht dargestellten Linearantriebs der Abstand AV zwischen den beiden Einheiten 100 und 200 individuell für das passende Packstück 7 einstellbar und somit an die Größe des Packstücks 7 anpassbar. Von den beiden Abstandssensoren 213, 114 ist jeweils einer an einer Einheit 100, 200 montiert, d.h. der Abstandssensor 114 ist an der Einheit 100 und möglichst außen in der Nähe der adhäsiv wirkenden Fläche 119 angeordnet, und der Abstandssensor 213 ist an der Einheit 200 und möglichst außen in der Nähe der adhäsiv wirkenden Fläche 219 angeordnet. Mit mehrteiligen Einheiten, insbesondere zwei Einheiten, kann gleichzeitig oder, wie in den Figuren 12 bis 15 dargestellt ist, sukzessive von einer Seite das Packstück 7 mit einem Hub 37 im Wesentlichen vertikal nach oben bewegt werden, um mittels der Tragvorrichtung 112, 212 das Tablett 127, 227 unter den Boden 72 des Packstücks 7 zu schieben.

Eine Handhabungsvorrichtung 5 mit mehreren Einheiten 100, 200 eignet sich besonders, um Packstücke 7, die im Verbund stehen aufzunehmen.

Die Fig. 11 zeigt eine Frontansicht oder eine Seitenansicht mit einem Packstück 7 und benachbarten darunterliegenden Packstücken 700, 702 und einem dahinterliegenden Packstück 701. Bei unterfahrenden Greifvorrichtungen des Standes der Technik wird das Packstück 7, wie in der Fig. 11 auf der rechten, unteren Seite mit dem Pfeil dargestellt ist, angehoben. Dabei wird das Packstück 7 nach hinten gekippt. Hohe, steife, nicht freistehende Packstücke 7, beispielswiese geschlossenen Kartons, erzeugen beim Kippen hohe Reibkräfte, da die hintere Kante 73, über die das Packstück 7 gekippt wird, nach vorne verschoben werden muss. Dies erschwert den Kippvorgang des Packstücks 7 und das zu kommissionierende Packstück 7 und/oder das darunter liegenden Packstück 700 kann beschädigt werden.

Die Fig. 12 bis 14 zeigen ein erfindungsgemäßes Verfahren, um mit einer erfindungsgemäßen, mehrteiligen Handhabungsvorrichtung 5 der Figur 10 ein im Verbund stehendes Packstück 7 mit einer größeren Breite effizient von einer Quell-Lasttragvorrichtung 8 zu kommissionieren.

Die Fig. 12 zeigt, wie in der Fig. 11, das Packstück 7 mit benachbarten, darunterliegenden Packstücken 700, 702 und einem seitlich danebenliegenden Packstück 701. Die Seite 70 bildet eine packstückfreie Seite 70, an der an dem Packstück 7 kein benachbartes Packstück angeordnet ist.

Das Packstück 7 wird mittels der Handhabungsvorrichtung 5 und der Einheit 200 in einem ersten Schritt zuerst lediglich an einer Seite mittels der adhäsiven Fläche 219 möglichst weit außen um den Hub 37 angehoben, um das Tablett 227 der Einheit 200 unter das Packstück 7 schieben zu können. Das Packstück 7 wird hierzu an der Seite angehoben, an der sich das benachbarte Packstück 701 befindet. Dabei befindet sich die Kippkante 73 des Packstücks 7 auf der packstückfreien Seite 70. Das Packstück 7 wird somit nicht wie im Stand der Technik (Fig. 11) nach hinten gekippt, sondern seitlich zu der packstückfreien Seite 70 in den freien Raum gekippt.

Die Fig. 13 zeigt zwei weitere Schritte zum Betreiben der Handhabungsvorrichtung 5. Hier ist das Tablett 227 der Einheit 200 in einem zweiten Schritt bereits unter den Boden 72 des Packstücks 7 linksseitig untergefahren.

In einem anschließenden dritten Schritt wird mittels der adhäsiven Fläche 119 der Einheit 100 das Packstück 7 an der zweiten Seite, die benachbart zur packstückfreien Seite 70 ist, um den Hub 37 angehoben.

Anschließend kann, wie in der Fig. 14 dargestellt ist, das Tablett 127 der Einheit 100 unter das Packstück 7 geschoben werden, so dass das Packstück 7 auf den beiden Tabletts 127, 227 steht. Nun ist das Packstück 7 an der Handhabungsvorrichtung 5 gesichert und kann von der Quell-Lasttragvorrichtung 8 sicher zur Zielposition auf die Ziel-Lasttragvorrichtung 9 mittels der Handhabungsvorrichtung 5 transportiert werden.

Die adhäsiv wirkenden Flächen 119, 219 der beiden Einheiten 100, 200 sind bei der Handhabungsvorrichtung 5 der Figur 10 bevorzugt derart mit nicht näher dargestellten Schwenklagern gelagert, dass die Drehbewegung der kontaktierten Oberfläche des Packstücks 7 beim Kippen des Packstücks 7 ausgeglichen wird.

Es versteht sich, dass ein Kontaktierungsvorgang als Greifvorgang beziehungsweise eine Kontaktierungsvorrichtung als Greifvorrichtung bezeichnet werden könnten.

## Patentansprüche

1. Handhabungsvorrichtung (5) zum Handhaben und Kommissionieren von Packstücken (7) mit einer Kontaktierungsvorrichtung (11) und einer Tragvorrichtung (12), wobei die Kontaktierungsvorrichtung (11) zum Kontaktieren von den zu kommissionierenden Packstücken (7) ausgebildet ist und mit der Tragvorrichtung (12) das Packstück (7) an der Handhabungsvorrichtung (5) sicherbar ist, wobei die Kontaktierungsvorrichtung (11) eine adhäsiv wirkende Fläche (19) zur temporären, steuerbaren Kontaktierung zwischen der Handhabungsvorrichtung (5) und dem Packstück (7) zur Ausübung einer Translation mit Scherkraft auf das Packstück (7) umfasst, **dadurch gekennzeichnet, dass** mit der der adhäsiv wirkenden Fläche (18) nach dem Kontaktierungsvorgang eine Hubbewegung mit dem Packstück (7) entgegengesetzt dessen Gewichtskraft ausführbar ist, wobei die Kontaktierungsvorrichtung (11) ein Trägerband (17) mit einem adhäsiv wirkenden Substrat (18) zur Ausbildung der adhäsiv wirkenden Fläche (19) aufweist,
wobei das Trägerband (17) als umlaufendes Endlosband (30) mit einer Regenerationsvorrichtung (31) zur Regeneration der adhäsiven Eigenschaften ausgebildet ist
oder wobei das Trägerband (17) auf einer Rolle (15) abrollbar und einer Wickelrolle (16) aufrollbar ausgebildet ist,
wobei eine Umlenkrolle, über die das Endlosband (30) geführt ist, oder die Wickelrolle (16) mit einem elektrischen Antriebsmotor (23) antreibbar ist, der von einer Steuerung (25) der Handhabungsvorrichtung (5) ansteuerbar ist, wobei die Hubbewegung durch Betätigen des Antriebsmotors (23) erfolgt.

2. Handhabungsvorrichtung (5) nach Anspruch 1, **dadurch gekennzeichnet, dass** mindestens eine Sensoreinrichtung (13; 14) zur orthogonalen Ausrichtung der Kontaktierungsvorrichtung (11) zu dem aufzunehmenden Packstück (7) vorgesehen ist.

3. Handhabungsvorrichtung (5) nach Anspruch 2, **dadurch gekennzeichnet, dass** die Sensorvorrichtung (13; 14) von mehreren, insbesondere zwei, Abstandssensoren (13, 14), insbesondere Ultraschallsensoren oder Laser-Abstandssensoren oder mechanischen Tastern oder Radarsensoren, gebildet ist, die in Arbeitsrichtung (A) ausgerichtet sind oder von einer Kamera, insbesondere einer Time-of-Flight Kamera, gebildet ist.

4. Handhabungsvorrichtung (5) nach Anspruch 2, **dadurch gekennzeichnet, dass** die Sensorvorrichtung (13; 14) von einer Kamera (28) und einer Laserprojektionsvorrichtung (29) gebildet ist.

5. Handhabungsvorrichtung (5) nach einem der Ansprüche 1 bis 4, **dadurch gekennzeichnet, dass** die die Rolle (15) und die Wickelrolle (16) in einer Kassette (34), insbesondere einer Tauschkassette, angeordnet sind.

6. Handhabungsvorrichtung (5) nach einem der vorherigen Ansprüche 1 bis 5, **dadurch gekennzeichnet, dass** die Tragvorrichtung (12) als translatorisch linear bewegbare Tablettvorrichtung (26) mit einem Linearantrieb am Tablett (27) ausgebildet ist, wobei der Linearantrieb von der Steuerung (25) der Handhabungsvorrichtung (5) ansteuerbar ist.

7. Handhabungsvorrichtung (5) nach Anspruch 6, **dadurch gekennzeichnet, dass** die Tablettvorrichtung (26) als einteilige oder mehrteilige Platte oder als mindestens zwei parallel zueinander angeordnete Zinken oder als Scherenmechanismus ausgebildet ist.

8. Handhabungsvorrichtung (5) nach einem der vorherigen Ansprüche 1 bis 7, **dadurch gekennzeichnet, dass** die Tragvorrichtung (12) mit einer Aufwälzvorrichtung mit Rollen, insbesondere mit einem auf den Rollen geführten Endlosband, ausgebildet ist.

9. Handhabungsvorrichtung (5) nach einem der Ansprüchen 1 bis 8, **dadurch gekennzeichnet, dass** die Kontaktierungsvorrichtung (11) und die Tragvorrichtung (12) mehrteilig in der Breite im Wesentlichen senkrecht zur kommissionierenden Arbeitsrichtung (A) der Handhabungsrichtung (5) ausgebildet ist, insbesondere mittels eines Linearantriebs in dieser Breite variierbar ausgebildet ist.

10. Handhabungsvorrichtung (5) nach den vorherigen Ansprüche 1 bis 9, **dadurch gekennzeichnet, dass** die adhäsive wirkende Fläche (19) mit einem elastischen, flexiblen, flächigen Gegenlager (33) in Wirkverbindung steht.

11. Handhabungsvorrichtung (5) nach Anspruch 10, **dadurch gekennzeichnet, dass** das Gegenlager (33) von Schaumstoff oder von mittels Federn vorgespannten Stiften gebildet ist.

12. Handhabungsvorrichtung (5) nach den vorherigen Ansprüchen 1 bis 11, **dadurch gekennzeichnet, dass** die adhäsiv wirkende Fläche (19), insbesondere in der Arbeitsebene (AE), rechteckförmig ausgebildet ist und insbesondere mit einem Winkel α zwischen ca. 90° bis ca. 110°, weiter bevorzugt zwischen ca. 93° bis ca. 100°, bevorzugt auf die individuelle Länge des Packstücks (7) einstellbar, vom Boden (36) der Tragvorrichtung (12) aus zur kommissionierenden Arbeitsebene (AE) der Arbeitsrichtung (A) hin ausgebildet ist.

13. Handhabungsvorrichtung (5) nach einem der vorherigen Ansprüche 1 bis 12, **dadurch gekennzeichnet, dass** die Kontaktierungsvorrichtung (11) und/oder die Tragvorrichtung (12) und/oder der Handhabungsmanipulator (10) mit passiven Schwenkausgleichslager ausgebildet ist, die eine Ausrichtung zwischen kommissionierender Arbeitsrichtung (A) und idealer Richtung (IR) zur Aufnahme des Packstücks (7) ausgleichen.

14. Mobiles, autonomes Flurförderzeug (1) mit einem Fahrzeugkörper (2), einer Fahrzeugsteuerung (3), einer Navigationsvorrichtung (4) und einer Handhabungsvorrichtung (5) nach einem der Ansprüche 1 bis 13, wobei am Fahrzeugkörper (2) eine Ziel-Lasttragvorrichtung (9) aufnehmbar ist, auf die Packstücke (7) aus verschiedenen Quell-Lasttragvorrichtungen (8) von der Handhabungsvorrichtung (5) packbar sind.

15. Mobiles, autonomes Flurförderzeug (1) nach Anspruch 14, dass die von der Kamera (28) und der Laserprojektionsvorrichtung (29) gebildete Sensorvorrichtung (13; 14) am Fahrzeugkörper (2) angeordnet sind.

16. Stationäre Kommissionieranlage mit einer Handhabungsvorrichtung (5) nach einem der Ansprüche 1 bis 13.

17. Verfahren zum Betreiben einer Handhabungsvorrichtung (5) nach einem der Ansprüche 1 bis 13, mit einer Kontaktierungsvorrichtung (11) und einer Tragvorrichtung (12), wobei mit der Handhabungsvorrichtung (5) Packstücke (7) von einer Quell-Lasttragvorrichtung (8) auf eine Ziel-Lasttragvorrichtung (9) kommissioniert werden, wobei mit der Kontaktierungsvorrichtung (11) das zu kommissionierende Packstück (7) an der Quell-Lastvorrichtung (8) kontaktiert wird, nach dem Kontaktierungsvorgang eine Hubbewegung mit dem Packstück (7) relativ zur Tragvorrichtung (12) ausgeführt wird, und mit der Tragvorrichtung (12) das Packstück (7) an der Handhabungsvorrichtung (5) zum Kommissionieren gesichert wird, **dadurch gekennzeichnet, dass** die Kontaktierungsvorrichtung (11) eine adhäsiv wirkende Fläche (19) umfasst, mit der das Packstück (7) an der Handhabungsvorrichtung (5) temporär und steuerbar adhäsiv kontaktiert wird und mit der auf das Packstück (7) eine Translation mit Scherkraft mit einem relativen Hub gegenüber der Tragvorrichtung (12) ausgeübt wird.

18. Verfahren nach Anspruch 17, **dadurch gekennzeichnet, dass** nach Durchführen des Hubs des Packstücks (12) die Tragvorrichtung (12) unter das Packstück (7) geschoben wird.

19. Verfahren nach Anspruch 18, **dadurch gekennzeichnet, dass** das Packstück (7) auf die Tragvorrichtung (12) abgelegt wird.

20. Verfahren nach einem der Ansprüche 17 bis 19, **dadurch gekennzeichnet, dass** zum Ablegen des Packstücks an der Ziel-Lasttragvorrichtung (9) die Tragvorrichtung (12) unter dem Packstück (7) herausgezogen wird und anschließend die adhäsiv wirkende Fläche (19) von dem Packstück (7) wegbewegt wird, insbesondere in horizontaler Richtung wegbewegt wird.

21. Verfahren nach dem Ansprüche 17 bis 20, **dadurch gekennzeichnet, dass** die Kontaktierungsvorrichtung (11) und die Tragvorrichtung (12) in der Breite, im Wesentlichen senkrecht zur kommissionierenden Arbeitsrichtung (A) in mehreren Einheiten (100, 200) ausgebildet sind, und die Einheiten (100, 200) im Kommissioniervorgang eines Packstücks (7) derart nacheinander betrieben werden, dass ein zu kommissionierendes Packstück (7) zuerst mit einer ersten Einheit (200) an einer ersten Seite angehoben und auf die Tragvorrichtung (227) der ersten Einheit (200) abgelegt wird, an der ein benachbartes Packstück (701) angeordnet ist, und anschließend das Packstück (7) mit einer zweiten Einheit (100) an einer zweiten Seite angehoben und auf die Tragvorrichtung (127) der zweiten Einheit (100) abgelegt wird, an der kein benachbartes Packstück angeordnet ist.

## Claims

1. Handling apparatus (5) for handling and picking packages (7) with a contact apparatus (11) and a carrying apparatus (12), wherein the contact apparatus (11) is configured to make contact with packages (7) to be picked, and the package (7) can be secured on the handling apparatus (5) by way of the carrying apparatus (12), wherein the contact apparatus (11) comprises an adhesively acting surface (19) for making temporary, controllable contact between the handling apparatus (5) and the package (7) in order to exert a translational motion with a shear force on the package (7), **characterized in that** a lifting movement with the package (7) opposite to its weight can be carried out by way of the adhesively acting surface (18) after the contact operation, wherein the contact apparatus (11) has a carrier strip (17) with an adhesively acting substrate (18) in order to configure the adhesively acting surface (19), wherein the carrier strip (17) is configured as a circulating endless strip (30) with a regeneration device (31) for the regeneration of the adhesive properties, or wherein the carrier strip (17) is configured such that it can be rolled up on a reel (15) and can be unrolled from a wound reel (16), wherein a deflection roller, over which the endless strip (30) is guided, or the wound reel (16) can be driven by way of an electric drive motor (23) which can be actuated by a controller (25) of the handling apparatus (5), wherein the lifting movement takes place by way of actuation of the drive motor (23).

2. Handling apparatus (5) according to Claim 1, **characterized in that** at least one sensor device (13; 14) is provided for the orthogonal orientation of the contact apparatus (11) with respect to the package (7) to be received.

3. Handling apparatus (5) according to Claim 2, **characterized in that** the sensor apparatus (13; 14) is formed by a plurality of (in particular, two) spacing sensors (13, 14), in particular ultrasonic sensors or laser spacing sensors or mechanical feelers or radar sensors which are oriented in the working direction (A), or is formed by a camera, in particular a time-of-flight camera.

4. Handling apparatus (5) according to Claim 2, **characterized in that** the sensor apparatus (13; 14) is formed by a camera (28) and a laser projection apparatus (29) .

5. Handling apparatus (5) according to one of Claims 1 to 4, **characterized in that** the reel (15) and the wound reel (16) are arranged in a cassette (34), in particular an exchange cassette.

6. Handling apparatus (5) according to one of the preceding Claims 1 to 5, **characterized in that** the carrying arrangement (12) is configured as a translational linearly movable tray apparatus (26) with a linear drive on the tray (27), wherein the linear drive can be actuated by the controller (25) of the handling apparatus (5).

7. Handling apparatus (5) according to Claim 6, **characterized in that** the tray apparatus (26) is configured as a single-piece or multiple-piece plate or as at least two prongs which are arranged parallel to one another or as a scissor mechanism.

8. Handling apparatus (5) according to one of the preceding Claims 1 to 7, **characterized in that** the carrying apparatus (12) is configured as a roll-on apparatus with rollers, in particular with an endless strip which is guided on the rollers.

9. Handling apparatus (5) according to one of Claims 1 to 8, **characterized in that** the contact apparatus (11) and the carrying apparatus (12) are configured in multiple pieces in the width direction substantially perpendicularly with respect to the picking working direction (A) of the handling apparatus (5), in particular are of variable configuration in this width direction by means of a linear drive.

10. Handling apparatus (5) according to the preceding Claims 1 to 9, **characterized in that** the adhesively acting surface (19) is operatively connected to an elastic, flexible, flat counter-support (33).

11. Handling apparatus (5) according to Claim 10, **characterized in that** the counter-support (33) is formed by foam or by pins which are preloaded by means of springs.

12. Handling apparatus (5) according to the preceding Claims 1 to 11, **characterized in that** the adhesively acting surface (19) is of rectangular configuration, in particular in the working plane (AE), and is configured, in particular, at an angle α of between approximately 90° and approximately 110°, further preferably of between approximately 93° and approximately 100°, preferably such that it can be set to the individual length of the package (7), from the bottom (36) of the carrying apparatus (12) towards the picking working plane (AE) of the working direction (A).

13. Handling apparatus (5) according to one of the preceding Claims 1 to 12, **characterized in that** the contact apparatus (11) and/or the carrying apparatus (12) and/or the handling manipulator (10) are/is configured with passive swivel compensation bearings which compensate for an orientation between the picking working direction (A) and the ideal direction (IR) for receiving the package (7).

14. Mobile, autonomous industrial truck (1) with a vehicle body (2), a vehicle controller (3), a navigation apparatus (4) and a handling apparatus (5) according to one of Claims 1 to 13, wherein a target load-bearing apparatus (9) can be received on the vehicle body (2), onto which target load-bearing apparatus (9) packages (7) from various source load-bearing apparatuses (8) can be packed by the handling apparatus (5).

15. Mobile, autonomous industrial truck (1) according to Claim 14, in that the sensor device (13; 14) which is formed by the camera (28) and the laser projection apparatus (29) is arranged on the vehicle body (2).

16. Stationary picking system with a handling apparatus (5) according to one of Claims 1 to 13.

17. Method for operating a handling apparatus (5) according to one of Claims 1 to 13, with a contact apparatus (11) and a carrying apparatus (12), wherein the packages (7) are picked from a source load-bearing apparatus (8) onto a target load-bearing apparatus (9) by way of the handling apparatus (5), wherein contact is made with the package (7) to be picked on the source load apparatus (8) by way of the contact apparatus (11), a lifting movement with the package (7) relative to the carrying apparatus (12) is carried out after the contact operation, and the package (7) is secured on the handling device (5) for picking by way of the carrying apparatus (12), **characterized in that** the contact apparatus (11) comprises an adhesively acting surface (19), by way of which contact is made with the package (7) on the handling apparatus (5) in a temporarily and controllably adhesive manner, and by way of which a translational motion with a shear force with a relative lift with respect to the carrying apparatus (12) is exerted on the package (7).

18. Method according to Claim 17, **characterized in that** the carrying apparatus (12) is pushed under the package (7) after the lift of the package (12) is carried out.

19. Method according to Claim 18, **characterized in that** the package (7) is deposited onto the carrying apparatus (12) .

20. Method according to one of Claims 17 to 19, **characterized in that**, in order to deposit the package on the target load-bearing apparatus (9), the carrying apparatus (12) is pulled out from under the package (7) and subsequently the adhesively acting surface (19) is moved away from the package (7), in particular is moved away in the horizontal direction.

21. Method according to Claims 17 to 20, **characterized in that** the contact apparatus (11) and the carrying apparatus (12) are configured in multiple units (100, 200) in the width direction, substantially perpendicularly with respect to the picking working direction (A), and the units (100, 200) are operated one after another in the picking operation of a package (7) in such a way that a package (7) to be picked is first of all lifted up on a first side by way of a first unit (200) and is deposited onto that carrying apparatus (227) of the first unit (200), on which an adjacent package (701) is arranged, and the package (7) is subsequently lifted up on a second side by way of a second unit (100) and is deposited onto that carrying apparatus (127) of the second unit (100), on which no adjacent package is arranged.

## Revendications

1. Dispositif de manipulation (5) pour la manipulation et la préparation de commandes de paquets (7) avec un dispositif de contact (11) et un dispositif de support (12), le dispositif de contact (11) étant configuré pour venir en contact avec les paquets (7) à préparer et le dispositif de support (12) permettant de sécuriser le paquet (7) sur le dispositif de manipulation (5), le dispositif de contact (11) comprenant une surface à effet adhésif (19) pour le contact temporaire commandable entre le dispositif de manipulation (5) et le paquet (7) afin d'effectuer une translation avec force de cisaillement sur le paquet (7), **caractérisé en ce qu'**après l'opération de contact, la surface à effet adhésif (18) permet d'effectuer un mouvement de levage avec le paquet (7) à l'encontre de son poids, le dispositif de contact (11) présentant une bande porteuse (17) avec un substrat à effet adhésif (18) pour former la surface à effet adhésif (19),
la bande porteuse (17) étant configurée sous forme de bande sans fin (30) en circulation avec un dispositif de régénération (31) pour régénérer les propriétés adhésives,
ou la bande porteuse (17) étant configurée sur un rouleau (15) pour pouvoir être déroulée et enroulée sur un rouleau d'enroulement (16),
un rouleau de renvoi sur lequel est guidée la bande sans fin (30) ou le rouleau d'enroulement (16) pouvant être entraîné par un moteur d'entraînement électrique (23) qui peut être commandé par une commande (25) du dispositif de manipulation (5), le mouvement de levage s'effectuant par actionnement du moteur d'entraînement (23).

2. Dispositif de manipulation (5) selon la revendication 1, **caractérisé en ce qu'**au moins un appareil de détection (13 ; 14) est prévu pour l'orientation orthogonale du dispositif de contact (11) par rapport au paquet (7) à recevoir.

3. Dispositif de manipulation (5) selon la revendication 2, **caractérisé en ce que** le dispositif de détection (13 ; 14) est formé par plusieurs, notamment deux, capteurs de distance (13, 14), notamment des capteurs à ultrasons ou des capteurs de distance à laser ou des palpeurs mécaniques ou des capteurs radar, qui sont orientés dans la direction de travail (A), ou est formé par une caméra, notamment une caméra à temps de vol.

4. Dispositif de manipulation (5) selon la revendication 2, **caractérisé en ce que** le dispositif de détection (13 ; 14) est formé par une caméra (28) et un dispositif de projection laser (29).

5. Dispositif de manipulation (5) selon l'une quelconque des revendications 1 à 4, **caractérisé en ce que** le rouleau (15) et le rouleau d'enroulement (16) sont agencés dans une cassette (34), notamment une cassette d'échange.

6. Dispositif de manipulation (5) selon l'une quelconque des revendications 1 à 5 précédentes, **caractérisé en ce que** le dispositif de support (12) est configuré sous forme de dispositif à plateau (26) mobile linéairement en translation avec un entraînement linéaire sur le plateau (27), l'entraînement linéaire pouvant être commandé par la commande (25) du dispositif de manipulation (5).

7. Dispositif de manipulation (5) selon la revendication 6, **caractérisé en ce que** le dispositif à plateau (26) est configuré sous forme de plaque en une partie ou plusieurs parties ou sous forme d'au moins deux dents agencées parallèlement l'une à l'autre ou sous forme d'un mécanisme à ciseaux.

8. Dispositif de manipulation (5) selon l'une quelconque des revendications 1 à 7 précédentes, **caractérisé en ce que** le dispositif de support (12) est configuré avec un dispositif d'enroulement avec des rouleaux, notamment avec une bande sans fin guidée sur les rouleaux.

9. Dispositif de manipulation (5) selon l'une quelconque des revendications 1 à 8, **caractérisé en ce que** le dispositif de contact (11) et le dispositif de support (12) sont configurés en plusieurs parties dans la largeur essentiellement perpendiculairement à la direction de travail de préparation de commandes (A) du dispositif de manipulation (5), notamment sont configurés sous forme variable dans cette largeur au moyen d'un entraînement linéaire.

10. Dispositif de manipulation (5) selon les revendications 1 à 9 précédentes, **caractérisé en ce que** la surface à effet adhésif (19) est en liaison active avec un contre-appui (33) élastique, flexible, plat.

11. Dispositif de manipulation (5) selon la revendication 10, **caractérisé en ce que** le contre-appui (33) est formé de mousse ou de broches précontraintes au moyen de ressorts.

12. Dispositif de manipulation (5) selon les revendications 1 à 11 précédentes, **caractérisé en ce que** la surface à effet adhésif (19), notamment dans le plan de travail (AE), est configurée sous forme rectangulaire et est notamment configurée avec un angle α entre environ 90° à environ 110°, de manière davantage préférée entre environ 93° à environ 100°, de préférence ajustable à la longueur individuelle du paquet (7), depuis le fond (36) du dispositif de support (12) vers le plan de travail de préparation de commandes (AE) de la direction de travail (A) .

13. Dispositif de manipulation (5) selon l'une quelconque des revendications 1 à 12 précédentes, **caractérisé en ce que** le dispositif de contact (11) et/ou le dispositif de support (12) et/ou le manipulateur (10) sont configurés avec des paliers de compensation de pivotement passifs qui compensent une orientation entre la direction de travail de préparation de commandes (A) et la direction idéale (IR) pour la réception du paquet (7) .

14. Chariot de manutention mobile autonome (1) avec un corps de véhicule (2), une commande de véhicule (3), un dispositif de navigation (4) et un dispositif de manipulation (5) selon l'une quelconque des revendications 1 à 13, dans lequel un dispositif de support de charge cible (9) peut être reçu sur le corps de véhicule (2), sur lequel des paquets (7) provenant de différents dispositifs de support de charge sources (8) peuvent être emballés par le dispositif de manipulation (5) .

15. Chariot de manutention mobile autonome (1) selon la revendication 14, en ce que le dispositif de détection (13 ; 14) formé par la caméra (28) et le dispositif de projection laser (29) est agencé sur le corps de véhicule (2) .

16. Installation de préparation de commandes stationnaire avec un dispositif de manipulation (5) selon l'une quelconque des revendications 1 à 13.

17. Procédé d'exploitation d'un dispositif de manipulation (5) selon l'une quelconque des revendications 1 à 13, avec un dispositif de contact (11) et un dispositif de support (12), des paquets (7) provenant d'un dispositif de support de charge source (8) étant préparés avec le dispositif de manipulation (5) sur un dispositif de support de charge cible (9), le paquet (7) à préparer étant mis en contact avec le dispositif de contact (11) sur le dispositif de charge source (8), un mouvement de levage étant effectué avec le paquet (7) par rapport au dispositif de support (12) après l'opération de contact, et le dispositif de support (12) permettant de sécuriser le paquet (7) sur le dispositif de manipulation (5) pour la préparation de commandes, **caractérisé en ce que** le dispositif de contact (11) comprend une surface à effet adhésif (19), avec laquelle le paquet (7) est mis en contact adhésif de manière temporaire et commandable sur le dispositif de manipulation (5) et avec laquelle une translation avec force de cisaillement est effectuée sur le paquet (7) avec une course relative par rapport au dispositif de support (12).

18. Procédé selon la revendication 17, **caractérisé en ce qu'**après avoir effectué la course du paquet (12), le dispositif de support (12) est glissé sous le paquet (7).

19. Procédé selon la revendication 18, **caractérisé en ce que** le paquet (7) est déposé sur le dispositif de support (12).

20. Procédé selon l'une quelconque des revendications 17 à 19, **caractérisé en ce que**, pour déposer le paquet sur le dispositif de support de charge cible (9), le dispositif de support (12) est retiré sous le paquet (7), puis la surface à effet adhésif (19) est éloignée du paquet (7), notamment dans la direction horizontale.

21. Procédé selon les revendications 17 à 20, **caractérisé en ce que** le dispositif de contact (11) et le dispositif de support (12) sont configurés en plusieurs unités (100, 200) dans la largeur, essentiellement perpendiculairement à la direction de travail de préparation de commandes (A), et les unités (100, 200) sont exploitées les unes après les autres dans l'opération de préparation de commandes d'un paquet (7) de telle sorte qu'un paquet (7) à préparer est d'abord soulevé par une première unité (200) sur un premier côté et déposé sur le dispositif de support (227) de la première unité (200), sur lequel est agencé un paquet (701) voisin, et ensuite le paquet (7) est soulevé par une deuxième unité (100) sur un deuxième côté et déposé sur le dispositif de support (127) de la deuxième unité (100), sur lequel aucun paquet voisin n'est agencé.
